# EUROPÄISCHE PATENTANMELDUNG

(11) **EP 2 256 357 A1**
(43) Veröffentlichungstag der Anmeldung: **01.12.2010**
(21) Anmeldenummer: 09161362.0
(22) Anmeldetag: 28.05.2009
(51) Int. Cl.: F16C 33/76, F16C 33/78, F16D 23/14

(54) **Ausrückeinrichtung für eine Kraftfahrzeugreibungskupplung mit einem Pendelkugellager**

(71) Anmelder: ZF Friedrichshafen AG, 88038 Friedrichshafen (DE)
(72) Erfinder: Reuter, Klaus, 97723, Oberthulba (DE); Obergfell, Ralf, 97497, Dingolshausen (DE); Rauch, Peter, 97688, Bad Kissingen (DE); Böhnlein, Alfred, 97711, Maßbach (DE)

(57) **Zusammenfassung**

Es wird eine Ausrückeinrichtung (10) zur Betätigung einer Reibungskupplung eines Kraftfahrzeuges beschrieben, welche ein Führungselement (12) und ein an diesem axial verlagerbares Ausrückelement (14) umfasst, an dem ein als Pendelkugellager ausgeführtes Ausrücklager (18) festgelegt ist. Das Ausrücklager (18) weist einen zu dem Ausrückelement (14) drehfesten Lagerring (22) mit einer ersten Laufbahn (22a), einen umlaufenden Lagerring (26) mit einer zweiten Laufbahn (26a,b) und zwischen den Laufbahnen (22a,26a,b) geführte Wälzkörper (27) auf, wobei die Lagerringe (22,26) radial zueinander angeordnet sind und wobei ein Mittelpunkt eines Laufbahnradius (R₁) des radial äußeren Lagerrings (22) auf der Mittelachse (A) des Ausrücklagers (18) liegt. Das Ausrücklager (18) zeichnet sich durch eine den Lagerinnenraum gegenüber der Umgebung abdichtende Dichtungsanordnung (28,30) mit einem Dichtelement (28a,32) aus, welches einen zwischen den Lagerringen (22,26) vorhandenen Spalt überbrückt und welches mit einer, zumindest mittelbar an einem der Lagerringe (22,26) ausgebildeten sphärischen Dichtfläche (26d,26f) in Dichtkontakt steht, deren Radius (R₂,R₃) von der Mittelachse (A) des Ausrücklagers (18) ausgeht und mit dem Laufbahnradius (R₁) einen gemeinsamen Mittelpunkt (M) aufweist.

## Beschreibung

Die Erfindung betrifft eine Ausrückeinrichtung für eine Kraftfahrzeugreibungskupplung gemäß dem Oberbegriff von Patentanspruch 1.

Eine gattungsgemäße Ausrückeinrichtung mit einem als Pendelkugellager ausgeführten Ausrücklager zum Ausgleich von Taumelbewegungen der Kupplung und eines Schrägstandes der Kupplungsachse zu der Ausrückerachse ist bereits mit der EP 1 375 946 A1 bekannt geworden. Bei der dort zeichnerisch dargestellten Ausführungsform ist das Pendelkugellager als einreihiges Schrägschulterlager mit einem feststehenden Außenring an einer Schiebehülse festgelegt, wobei die Laufbahn des Außenrings zwei verschiedene Radien aufweist. Ein erster Laufbahnradius ist als Schmiegeradius nur unwesentlich größer als der Radius der Kugeln, während diese Laufbahn durch einen zweiten Laufbahnradius unterbrochen wird, der um ein Vielfaches größer als der Schmiegeradius ist und seinen Ausgangspunkt auf der Mittelachse des Ausrücklagers hat. Dadurch können sich die Lagerkugeln bei ihrem Umlauf im Außenring innerhalb eines Auslenkwinkelbereiches bewegen und somit den in üblicher Weise gefertigten und mit einer Ausrückfeder der Kupplung rotierenden Lagerinnenring gegenüber der Mittelachse der Ausrückeinrichtung zur Ausführung einer Taumelbewegung verschwenken.

Der EP 1 375 946 A1 ist kein Hinweis entnehmbar, wie das Ausrücklager infolge der veränderlichen Lagebeziehung von Lagerinnen- und Lageraußenring gegenüber dem Austritt eines Schmiermittels und gegenüber dem Eintritt von Schmutz in das Lager geschützt wird.

Von dem genannten Stand der Technik ausgehend, stellt sich die Erfindung die Aufgabe, eine Ausrückeinrichtung der eingangs genannten Art mit einem Pendelkugellager bereitzustellen, dessen Innenraum bei einer gegenseitigen Verschwenkung der Lagerringe zuverlässig abgedichtet ist.

Die vorstehend genannte Aufgabe wird bei einer gattungsgemäßen Ausrückeinrichtung durch die im Kennzeichen des Hauptanspruchs genannten Merkmale gelöst.

Die mit der vorliegenden Erfindung vorgeschlagene Ausrückeinrichtung zur Betätigung einer Reibungskupplung eines Kraftfahrzeuges umfasst damit ein Führungselement und ein an diesem axial verlagerbares Ausrückelement, an dem ein als Pendelkugellager ausgeführtes Ausrücklager festgelegt ist. Das Ausrücklager weist einen zu dem Ausrückelement drehfesten Lagerring mit einer ersten Laufbahn, einen umlaufenden Lagerring mit einer zweiten Laufbahn und zwischen den Laufbahnen geführte Wälzkörper auf, wobei die Lagerringe radial zueinander angeordnet sind und wobei ein Mittelpunkt eines Laufbahnradius des radial äußeren Lagerrings auf der Mittelachse des Ausrücklagers liegt. Die Ausrückeinrichtung zeichnet sich durch eine den Lagerinnenraum gegenüber der Umgebung abdichtende Dichtungsanordnung mit einem Dichtelement aus, weiches einen zwischen den Lagerringen vorhandenen Spalt überbrückt und weiches mit einer, zumindest mittelbar an einem der Lagerringe ausgebildeten sphärischen Dichtfläche in Dichtkontakt steht, deren Radius von der Mittelachse des Ausrücklagers ausgeht und mit dem Laufbahnradius eine gemeinsamen Mittelpunkt aufweist.

Durch die sphärische Gestaltung der Dichtfläche bleibt bei einer Pendel- oder Taumelbewegung des Ausrücklagers das Abstandsmaß zwischen dem Dichtelement und der relativ zu diesem bewegten Dichtfläche unverändert bestehen, so dass dadurch die Wirksamkeit der Dichtungsanordnung jederzeit gewährleistet ist.

Die Laufbahnen des Pendelkugellagers können wie in der EP 1 375 946 A1 beschrieben ausgeführt werden. Das heißt insbesondere, dass die Pendel-Laufbahn des Außenrings ein oder beidseitig von einem weiteren Laufbahnabschnitt begrenzt sein kann, dessen Laufbahnradius als Schmiegeradius nur unwesentlich größer als der Radius der Kugeln ausgeführt ist. Außen- und Innenring des Ausrücklagers sind wahlweise als Massivteile oder gewichtsoptimiert als Blechumformteile herstellbar, wobei die Lagerringlaufbahnen zusätzlich durch bekannte Hartstoffbeschichtungen gegenüber einem Verschleiß geschützt werden können. Der Zusammenhalt des Ausrücklagers kann durch an den Lagerringen ausgeführte Schnappborde oder alternativ mittels an Umgebungsbauteilen vorgesehenen Haltestrukturen erfolgen, weiche hierzu einen oder beide Lagerringe axial übergreifen und sich mit diesen radial überlappen. Die vorgeschlagene Ausrückeinrichtung kann auf vielfältige Weise realisiert werden und ist hinsichtlich deren weiteren Ausgestaltung nicht begrenzt. So kann gemäß einer an sich bekannten Ausgestaltungsvariante das Führungselement als ein zur Festlegung an einem Fahrzeuggetriebe vorgesehenes Führungsrohr und das Ausrückelement als eine Schiebehülse ausgebildet sein. Gemäß einer anderen, an sich ebenso bekannten Variante kann das Führungselement als ein Gehäuse eines konzentrischen Druckmittelzylinders und das Ausrückelement als dessen Kolben ausgebildet sein.

Wahlweise kann bei dem Pendelkugellager der Außenring oder alternativ der Innenring an dem Führungselement festgelegt sein, so dass sich der jeweils andere Lagerring mit einem Betätigungsorgan der Reibungskupplung, insbesondere einer Membranfeder, frei drehen kann. Die an der Membranfeder anliegende Lagerringfläche kann wahlweise eine gehärtete oder hartchromatierte Stahloberfläche sein oder zum Verschleißschutz eine Kunststoffanlaufscheibe tragen. Zudem kann zwischen dem drehenden Lagerring und der Kupplungsmembranfeder eine Drehmitnahmeverbindung, z.B. eine Formschlussverbindung, ausgebildet sein.

Die Dichtungsanordnung kann prinzipiell je nach Anforderung in an sich bekannter Weise als Berührungsdichtung oder als Spaltdichtung ausgeführt sein, wobei als Dichtelemente beispielsweise Ringlippendichtungen in Blech-Elastomer-Verbundbauweise, schmiermittelgetränkte Filzringe oder Ringblech- oder Kunststoffdichtscheiben zum Einsatz gelangen können. Die sphärische Dichtfläche kann vorteilhaft unmittelbar an einem der Lagerringe oder alternativ an einem mit dem Lagerringen verbundenen Element ausgeführt sein. Die jeweils andere Seite des Dichtelements kann entweder unmittelbar oder mittelbar unter Zwischenlagerung eines weiteren mit dem Lagerring in fester Beziehung stehenden Elements an dem jeweils anderen Lagerring angeordnet oder an dem Ausrückelement festgelegt sein. Wenn das Dichtelement fest an oder zu dem inneren Lagerring angeordnet ist, so kann die Pendel-Laufbahn gleichzeitig auch als Dichtfläche dienen. Selbstverständlich kann das Dichtelement auch fest an oder zu dem Lageraußenring angeordnet sein, was dann die Ausbildung einer sphärischen Dichtfläche am Lagerinnenring erfordert.

Gemäß einer besonders bevorzugten Ausgestaltung ist vorgesehen, dass das Pendelkugellager einen doppelreihigen Wälzkörpersatz aufweist und damit als ein zweireihiges Schrägkugellager ausgeführt ist. Diese Bauart zeichnet sich gegenüber einem einreihigen Pendellager durch eine deutlich erhöhte Standfestigkeit auf. Zur Optimierung des Bauraums sind die Kugelreihen vorteilhaft versetzt zueinander angeordnet. Die Kugeln werden, wie auch bei einer einreihigen Ausführung, vorzugsweise von einem Kunststoff-Kugelhalter aus Polyamid 66 oder Polyamid 46 mit Glasfaserfüllung im Lager gehalten, wobei der Kugelhalter optional eine Schmierstofffüllung enthalten kann.

Mit weiterem Vorteil ist das Ausrücklager radial selbstzentrierend an dem Ausrückelement angeordnet. Dazu kann der stehende Lagerring in bekannter Weise mittels eines Haltebleches mit einem Radialspiel mit der Schiebehülse verbunden werden. Alternativ können die Haltemittel zur Anordnung des Ausrücklagers auch integral an dem Ausrückelement ausgeführt sein, wie dieses in der ebenfalls von der Anmelderin stammenden deutschen Patentanmeldung Akz. 10 2008 042 217.7 beschrieben ist und deren Offenbarungsgehalt in die vorliegende Anmeldung aufgenommen wird. Zwischen dem feststehenden Lagerring und einem Haltemittel oder der Anlagefläche des Lagerrings an dem Ausrückelement, insbesondere einer Schiebehülse oder dem Kolben eines Druckmittelzylinders ist mit Vorteil ein Elastikelement, z.B. ein Federstahlelement oder ein Elastomerelement eingefügt, weiches zur Ermöglichung einer radialen Selbstjustage des Ausrücklagers eine definierte axiale Vorspannung erzeugt.

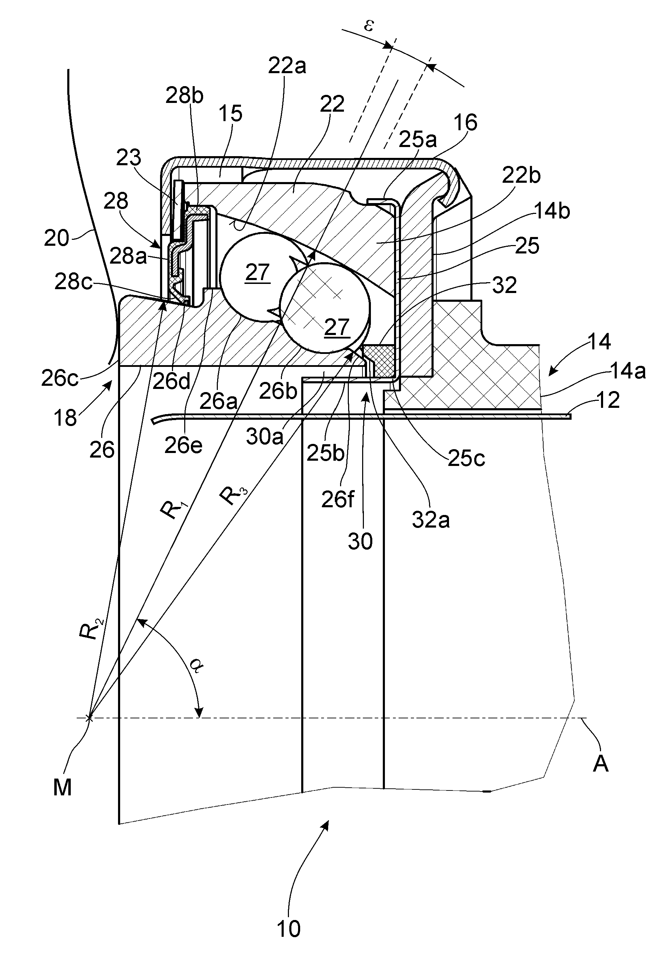

Die Erfindung wird nachfolgend anhand der beigefügten Figur beispielhaft erläutert, weiche in einer Halbebene einen Axialschnitt einer Ausrückeinrichtung 10 zur Betätigung einer hier zeichnerisch nicht dargestellten Reibungskupplung eines Kraftfahrzeuges zeigt.

Die Ausrückeinrichtung 10 umfasst zunächst ein als Führungsrohr 12 ausgebildetes Führungselement, weiches bezüglich der Reibungskupplung zur ortsfesten Anordnung koaxial zu deren Rotationsachse vorgesehen ist. Üblicherweise ist das Führungsrohr 12 dazu an einem hier nicht dargestellten Gangwechselgetriebe festgelegt. Auf das aus einem Stahlblech geformte Führungsrohr 12 ist ein als Schiebehülse 14 ausgebildetes und hier aus Kunststoff gefertigtes Ausrückelement mit einem rohrförmigen Führungsabschnitt 14a aufgeschoben und dort axial verlagerbar gehalten.

Die Schiebehülse 14 umfasst weiter einen als Radialflansch 14b aus Stahlblech ausgebildeten Befestigungsabschnitt, an dem mittels eines dort eingeschnappten Haltebleches 16 ein Ausrücklager 18 radial selbstzentrierbar gehalten wird. Dazu hintergreift das Halteblech 16 einerseits den abgewinkelten Außenrand des Radialflansches 14b und erstreckt sich in axialer Richtung unter Einschluss eines radialen Spielzwischenraums 15 über die freie Stirnseite des feststehenden Lagerrings 22, um dort über eine Federscheibe 23 an dem Lagerring 22 anzugreifen. Der Figur ist entnehmbar, dass der Lageraußenring 22 somit axial vorgespannt mit einem nach radial innen weisenden Abschnitt 22b unter Zwischenlagerung eines Ringbleches 25 an einer zur Reibungskupplung gerichteten Anlagefläche des Radialflansches 14b anliegt und dort in dieser Radialebene zum Ausgleich eines Achsversatzes von Kupplungsachse und der Mittelachse A der Ausrückeinrichtung 10 um einen gewissen Betrag frei verschiebbar gehalten ist.

Das Ausrücklager 18 ist als Schrägkugellager, hier insbesondere als zweireihiges Pendelkugellager ausgeführt und dient zur Drehentkopplung einer auf die Schiebehülse 14 axial eingeleiteten und an ein mit der Reibungskupplung rotierendes Kupplungsausrückorgan, hier einer Membranfeder 20, weitergeleiteten Betätigungskraft. Das Ausrücklager 18 umfasst dazu den zu dem Radialflansch 14b drehfesten äußeren Lagerring 22 mit einer ersten Laufbahn 22a, Kugeln 27 und einen umlaufenden inneren Lagerring 26 mit einer zweitteiligen Laufbahn 26a, b, wobei der Lagerring 26 mit einer axial über das Ausrücklager 18 vorstehenden Ringfläche 26c an der Membranfeder 20 anliegt.

Wie in der Figur gut erkennbar, ist die erste Laufbahn 22a mit einem gegenüber den Kugeln 27 deutlich größeren Laufbahnradius R₁ ausgeführt, welcher auf der Mittelachse A des Ausrücklagers 18 liegt. Die zweite, am inneren Lagerring 26 ausgeführte Laufbahn umfasst für den zweireihigen Kugelsatz zwei Laufbahnabschnitte 26a; 26b, deren Laufbahnradien nur unwesentlich größer als die Kugelradien und in an sich bekannter Weise als Schmiegeradien ausgebildet sind. Durch diese Ausgestaltung kann der Innenring 26 einen Schrägstand der Kupplungsachse zur Mittelachse A der Ausrückeinrichtung 10 und Taumelbewegungen der Kupplung kompensieren, indem der Innenring 26 mit dem Kugelsatz um einen Winkel ε um die Mittellage, genauer um den Betriebsdruckwinkel α pendeln kann.

Die zwischen den Lagerringen 22, 26 vorhandenen Spalte werden durch zwei Dichtungsanordnungen 28, 30 überdeckt. Die kupplungsseitige Dichtungsanordnung 28 umfasst als Dichtelement 28a eine Metall-Elastomerringdichtung, die mit einem Ringkragen 28b fest mit dem Lageraußenring 22 verbunden und dort mittels der Federscheibe 23 axialgesichert ist und deren radial innen befindliche elastische Dichtlippe 28c im Kontakt mit einer Dichtfläche 26d des Innenringes 26 steht, deren Radius R₂ ebenfalls von der Mittelachse A des Ausrücklagers 18 ausgeht und mit dem Laufbahnradius R₁ den gemeinsamen Mittelpunkt M aufweist. Die Dichtfläche 26d wird zur Laufbahn 26a, b hin von einem nach radial außen gerichteten Bord 26e begrenzt, welches im Zusammenwirken mit dem Dichtelement 28a die Lagerringe 22, 26 unverlierbar zusammenhält.

Die zu dem Radialflansch 14b benachbarte Dichtungsanordnung 30 ist als Spaltdichtung ausgeführt und umfasst das Ringblech 25, welches durch eine am Lageraußenring 22 angreifende Abwinkelung 25a bei einer radialen Selbstjustage des Ausrücklagers 18 radial mitgeführt wird und welches mit einem axial und parallel zu dem Innenring 26 verlaufenden Innenabschnitt 25b einen Dichtspalt 30a konstanter Größe ausbildet. In einem abgewinkelten Übergangsbereich 25c ist an dem Ringblech 25 ein Filzelement 32 eingesetzt, das mit einer Außenfläche 32a einer am Lagerinnenring 26 vorgesehenen weiteren Dichtfläche 26f unter Bildung eines Spaltes gegenüberliegt. Auch diese Dichtfläche 26f weist einen von der Mittelachse A des Ausrücklagers 18 ausgehenden Radius R₃ mit Ursprung im Punkt M auf.

### Bezugszeichenliste

- 10: Ausrückeinrichtung
- 12: Führungselement, Führungsrohr
- 14: Ausrückelement, Schiebehülse
- 14a: Führungsabschnitt
- 14b: Radialflansch
- 15: Spielzwischenraum
- 16: Halteblech
- 18: Ausrücklager
- 20: Membranfeder
- 22: Lageraußenring
- 22a: Laufbahn
- 22b: Radialabschnitt
- 23: Federscheibe
- 25: Ringblech
- 25a: Abwinkelung
- 25b: Innenabschnitt
- 25c: Übergangsbereich
- 26: Lagerinnenring
- 26a, b: Laufbahn
- 26c: Ringfläche
- 26d: Dichtfläche
- 26e: Bord
- 26f: Dichtfläche
- 27: Kugel
- 28, 30: Dichtungsanordnung
- 28a: Dichtelement
- 28b: Ringkragen
- 28c: Dichtlippe
- 30a: Dichtspalt
- 32: Filzelement
- 32a: Außenfläche
- A: Mittelachse
- M: Mittelpunkt
- R₁, R₂, R₃: Radius

## Patentansprüche

1. Ausrückeinrichtung (10) zur Betätigung einer Reibungskupplung eines Kraftfahrzeuges, umfassend
- ein Führungselement (12) und ein an diesem axial verlagerbares Ausrückelement (14), an dem ein als Pendelkugellager ausgeführtes Ausrücklager (18) festgelegt ist mit
- einem zu dem Ausrückelement (14) drehfesten Lagerring (22) mit einer ersten Laufbahn (22a), einem umlaufenden Lagerring (26) mit einer zweiten Laufbahn (26a, b) und mit zwischen den Laufbahnen (22a; 26a,b) geführten Wälzkörpern (27), wobei
- die Lagerringe (22, 26) radial zueinander angeordnet sind und ein Mittelpunkt eines Laufbahnradius (R₁) des radial äußeren Lagerrings (22) auf der Mittelachse (A) des Ausrücklagers (18) liegt,
- **dadurch gekennzeichnet,**
**dass** das Ausrücklager (18) eine den Lagerinnenraum gegenüber der Umgebung abdichtende Dichtungsanordnung (28; 30) mit einem Dichtelement (28a; 32) umfasst, welches einen zwischen den Lagerringen (22, 26) vorhandenen Spalt überbrückt und welches mit einer, zumindest mittelbar an einem der Lagerringe (26) ausgebildeten sphärischen Dichtfläche (26d; 26f) in Dichtkontakt steht, deren Radius (R₂; R₃) von der Mittelachse (A) des Ausrücklagers (18) ausgeht und mit dem Laufbahnradius (R₁) einen gemeinsamen Mittelpunkt (M) aufweist.

2. Ausrückeinrichtung nach Patentanspruch 1,
**dadurch gekennzeichnet,**
**dass** das Pendelkugellager (18) als zweireihiges Schrägkugellager ausgeführt ist.

3. Ausrückeinrichtung nach Patentanspruch 1 oder 2,
**dadurch gekennzeichnet,**
**dass** das Ausrücklager (18) radial selbstzentrierend an dem Ausrückelement (14) angeordnet ist.
